# EUROPEAN PATENT SPECIFICATION

(11) **EP 1 647 151 B1**
(45) Date of publication and mention of the grant of the patent: **04.06.2014**
(21) Application number: 03818029.5
(22) Date of filing: 11.07.2003
(51) Int. Cl.: H04W 16/32, H04W 36/04, H04W 92/20

(54) **OVERLAY MICRO CELL STRUCTURE FOR UNIVERSAL MOBILE TELEPHONE SYSTEM NETWORK**
OVERLAY-MIKROZELLENSTRUKTUR FÜR EIN UNIVERSELLES MOBILTELEFON-SYSTEMNETZWERK
STRUCTURE DE MICROCELLULES DE RECOUVREMENT POUR RESEAU DE SYSTEME UNIVERSEL DE TELECOMMUNICATION MOBILE

(43) Date of publication of application: 19.04.2006
(73) Proprietor: Thomson Licensing, 92130 Issy-les-Moulineaux (FR)
(72) Inventor: LI, Jun, Plainsboro, NJ 08536 (US); KEEL, Alton, Melbourne, FL 32940 (US); GAO, Wen, Plainsboro, NJ 08536 (US); VERMA, Shaily, 400076 Mumbai (IN)
(74) Representative: Frese Patent
(86) International application number: PCT/US2003/021746
(87) International publication number: WO 2005/015924

(56) References cited:
- WO-A1-03/007645
- WO-A2-01/99466
- WO-A2-02/087160
- US-A- 5 594 782
- US-A1- 2002 159 409
- US-B1- 6 212 382

## Description

### TECHNICAL FIELD

This invention relates to a wireless telephone network that affords improved access at relatively low cost.

### BACKGROUND ART

Wireless telephony technology continues to evolve over time. Most recently, the European Telecommunications Standards Institute (ETSI) has promulgated a new standard for mobile telephony service, known as "Universal Mobile Telecommunications Service" or UMTS which offers broadband, packet-based transmission of voice, text, video and multimedia information at rates as high as 2 Mbs. The proposed UMTS standard describes a wireless network that includes one or more radio access nodes, each typically referred to as a "Node B." One or more Radio Network Controllers (RNC) exist within the UMTS network to manage the radio access nodes. Each RNC has a broadband connection, typically in the form of an Asynchronous Transport Mode (ATM) Link, to a UMTS core network that provides Authorization, Authentication and Accounting (AAA) Functions.

Advances in the field of wireless LAN technology have resulted in the emergence of publicly accessible wireless LANs (e. g.,"hot spots") at rest stops, cafes, libraries and similar public facilities. Presently, wireless LANs offer mobile terminal users access to a private data network, such as a Corporate Intranet, or a public data network such as the Internet. The relatively low cost to implement and operate a wireless LAN, as well as the available high bandwidth (usually in excess of 10 Megabits/second) makes the wireless LAN an ideal access mechanism through which the mobile terminal user can exchange packets with an external entity.

WO 01/99466 describes an apparatus and associated method for an integrated packet radio communication system. The integrated system is formed of portions of a GPRS system as well as portions of a WLAN system, such as that defined in the IEEE 802.11 standard. A WLAN Integrated Protocol layer is defined, functionally positioned between upper-level, GPRS layers and lower-level, WLAN layers. The integrated system maintains the advantages of a GPRS system as well as the WLAN system.

WO 02/087160 relates to a heterogeneous mobile radio system for providing services from a packet data network for a mobile terminal. The system comprises at least one first mobile radio network and one second mobile radio network. The mobile radio networks respectively comprise at least one access node to the packet data network, and the access node of the second mobile radio network can only be indirectly connected to the packet data network via the access nodes of the first mobile radio network. A method is also described for providing services from a packet data network for a mobile terminal of a mobile radio system, and includes the following steps: (a) at least one first and one second mobile radio network respectively comprising at least one access node to the packet data network are provided; and (b) the mobile radio networks are combined in such a way that data packets can only be indirectly transported between the second mobile radio network and the packet data network via the access nodes of the first mobile radio network. WO 02/087160 also describes a mobile terminal for using a heterogeneous mobile radio system comprising at least one first mobile radio network and one second mobile radio network. The mobile terminal can simultaneously maintain connections to the first and the second mobile radio networks.

US2002/159409 describes a wireless communication network supporting mobile communications includes a mesh of radio base stations (RBSs) interconnected as packet data routing network. The RBSs are RF-coupled together so that adjacent ones may relay communications traffic to each other. By attaching to the mesh of radio base stations at one or more attachment points, communications traffic may be routed between a base station controller and any one of the radio base stations in the mesh based on configuring the appropriate route through the mesh. Preferably, the mesh is implemented as an IP-based routing network with each radio base station in the mesh operating as an addressable routing node within the mesh.

Given the advantages offered by wireless LANS, various standards bodies have under consideration proposals for loosely coupling the UMTS and wireless LAN networks to offer complimentary services. A loose coupling implies no system relations at network layer and/or below in the two networks. Generally, without tight coupling between the UMTS network and the wireless LAN, which is a fairly costly proposition, the UMTS network operator cannot effectively control subscriber access to the wireless LAN. Hence, the revenue generated from wireless LAN access remains with the wireless LAN operator.

To compete with the wireless LAN technology, a UMTS network operator could offer a micro-cell solution, i.e. increase the number of radio access nodes, to afford greater access. However, increasing the number of access nodes significantly increases equipment and deployment costs.

Thus, there is need for a technique for increasing the capacity of a UMTS network at a relatively low cost.

### BRIEF SUMMARY OF THE INVENTION

The object of the present invention is achieved by the subject-matter of the independent Claims. Preferred embodiments are set out in the dependent Claims.

Briefly, there is provided a method for communicating information in a wireless network that has at least one macro cell capable of exchanging voice and data with a mobile communications device across a first wireless link, and at least one micro cell capable of communicating data at a relatively high bandwidth with the mobile communications device across a second wireless link. Typically, the micro cell has a smaller coverage area and higher capacity per user than the macro cell. Responsive to the receipt at the micro cell of an access request from a mobile terminal via the second wireless link, the micro cell communicates signaling information across a third wireless channel to the macro cell for transmission to a control element in the wireless network. The wireless network controls the micro cell in response to the signaling information. Communicating signaling information from the micro cell to the macro cell through a wireless channel advantageously avoids the need a wired back haul circuit to communicate such signaling information, thus allowing micro cell deployment at lower cost.

### BRIEF SUMMARY OF THE DRAWING

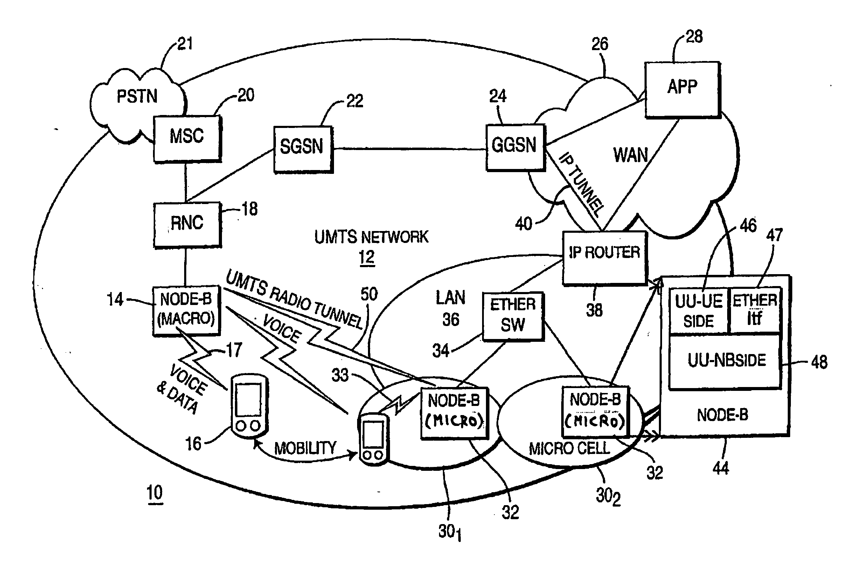

FIGURE 1 depicts a block schematic diagram of a wireless communications network in accordance with a preferred embodiment of the present principles.

### DETAILED DESCRIPTION

FIGURE 1 illustrates a block schematic diagram of a wireless communications system 10 in accordance with a preferred embodiment of the present principles. The system 10 includes a wireless network 12, which preferably has an architecture corresponding to that described in the well-known Universal Mobile Telephone System (UMTS) standard. Accordingly, the network 12 bears the designation "UMTS network." Within the UMTS network 12, there exists at least one, and preferably, a plurality of macro cells, each comprising a radio access node 14 which is some times referred to as a "Node B." Each radio access node 14 includes a radio transceiver (not shown) capable of exchanging both voice and data traffic with a mobile communications device 16 across a wireless link 17. The mobile communications device 16 can include a wireless telephony handset, a wireless Personal Data Assistant (PDA) or a personal computer having a wireless modem.

Within the UMTS network 12, each radio access node 14 operates under the control of a Radio Network Controller (RNC), exemplified by RNC 18. Each RNC 18 manages at least one, and preferably, a plurality of radio access nodes 14 to assure that each node provides the appropriate radio resources required by each mobile communications device in communications therewith. A Mobile Switching Center (MSC) 20 couples each RNC 18 to a Public Switched Telephone Network (PSTN) 21 to enable the mobile communications device 16 to exchange voice traffic with one or more telephone subscribers served by the PSTN.

Each RNC 18 interfaces with an associated control element in the form of a Serving General Packet Radio Service Node (SGSN) 22. While FIG. 1 illustrates a single SGSN 22, the wireless telephony network 12 can include a plurality of SGSNs, each associated with one or more RNCs 18. Each SGSN 22 identifies and authenticates each mobile communications device 16 seeking access via a corresponding access radio node 14 managed by an associated RNC 20. In addition to performing authorization and authentication, each SGSN 22 also accounts for the services rendered to the mobile communications devices 16 while in communications with the network 12.

Within the UMTS network 12, a Gateway GPRS Support Node (GGSN) 24 provides an interface between the SGSN 22 and an IP network 26 depicted as a Wide Area Network (WAN) that could include a private data network, or a public data network such as the Internet or combination thereof. In its role as the interface between the SGSN 22 and the WAN 26, the GGSN 24 assigns an IP address to each mobile communications device, such as the device 16, seeking access to the WAN 26. In this way, the mobile communications device 16 can gain access to information stored on one or more servers in the WAN 26, such as server 28.

In practice, the wireless link 17 offers limited bandwidth. Thus, exchanging large files, especially those containing text, audio, video or a combination thereof, between the mobile communications device 16 and the radio access node 14 become impractical. Consequently, subscribers of UMTS service often seek broadband access via a wireless LAN (not shown), rather than through the UMTS network. Such subscriber migration causes the UMTS network operator to lose revenue.

The bandwidth constraint in the UMTS network 12 is overcome by the addition of at least one, and preferably, a plurality of micro cells, exemplified by micro cells 30₁ and 30₂. Each micro cell comprises a radio access node 32 (i. e. , a"Node B") whose structure resembles the structure of an access point (not shown) of the type found in wireless LANs. With such a structure, the radio access node 32 comprising each micro cell can provide a high bandwidth (i. e. , a broadband) wireless channel 33 for exchanging data packets with the mobile communications device 16.

An Ethernet switch 34 comprising part of a Local Area Network 36 provides a connection between an IP router 38 and each of the micro cells 30₁ and 30₂. The IP router 38 routes IP packets between the Ethernet switch 34 and the WAN 26. A first IP tunnel 40 within the WAN 26 carries packets between the GGSN 24 of the UMTS network 12 and the IP router 38. In this way, a mobile communication device, such as device 16, upon gaining access to a micro cell, such as micro cell 301 can thus establish a high-speed data connection through the LAN 36 to the WAN 26 to enable the server 28 in the WAN to download information via a link.

The radio access node 32 comprising each micro cell includes a protocol stack 44 that holds the various protocols needed to facilitate wireless packet communication with the mobile communications device 16. In the illustrated embodiment, the protocol stack 44 includes an uplink interface (UU-UEside) 46 that has an associated Ethernet interface (etherItf) 47. In addition to the uplink interface 46, the protocol stack 44 also includes a downlink interface (UU-NBside) 48.

To facilitate seamless transition of data communication between the radio access node 14 and the radio access node 32, an exchange of signaling information generally must occur between the radio access node 32 and the SGSN 22 upon access of a micro cell by the mobile communications device 16. The exchange of signaling information allows the SGSN 22 to control the radio access node 32, and in particular, to control authorization and authentication of the mobile communications device 16 seeking access to the radio access node. In connection with controlling micro cell (radio access node) 32 and the macro cell (radio access node) 14, the SGSN 22 will assign codes and power settings to enable the mobile communication device 16 to communicate with a macro cell and a micro cell simultaneously. In the past, a wired ATM back haul link (not shown) provided the signaling path between each radio access node 32 and the SGSN 22. Such back haul links while effective, are nonetheless expensive to deploy and maintain, which ultimately puts the micro cells 30₁ and 30₂ at a operating cost-disadvantage as compared the access points (not shown) of a wireless LAN.

In accordance with the present principles, the exchange of signaling information between the radio access node 32 and the SGSN 22 occurs over a UMTS radio tunnel (channel) 50 extending between the radio access nodes 32 and 14. The UMTS radio channel 50 provides a virtual connection that enables the radio access node 32 to exchange signaling information with the SGSN 22, thereby obviating the need for a wired link and the attendant cost disadvantage associated therewith. Rather than utilize a separate radio channel to carry signaling information for each individual micro cell, a single UMTS radio tunnel can encapsulates all UMTS signaling messages passing between the micro cells and the radio access node 14. In practice, each radio access node 32 transmits the signaling information at relatively low rate, resulting in little interference at the radio access node 14.

To reduce or virtually eliminate the interference at each mobile device 16 as well as at each radio access node 14, a single source, such as a mobile communications device 16 or one of the radio access nodes 14 and 32 will use different channels for voice/data/signaling along with different channelization codes, but the same scrambling code. Different sources will use different scrambling codes. Typically, each mobile communications device, such as device 16, uses different radio channels (i.e., different orthogonal channelization code for CDMA) for uplinked voice and data, thus virtually eliminating the possibility of interference at the radio access nodes 14 and 32. Each mobile communications device, such as device 16, receives signals from the radio access nodes 14 and 32 during a down link mode using different scrambling codes so that the cross interference between the two signals is small if signal powers at the device 16 are close to each other.

The communications system 10, with its micro cells 30₁ and 30₂, affords low cost access by using the wireless tunnel 50 to communicate signaling information between the micro cells and RNC 18, and by separating the voice traffic and data traffic as between the macro cell (radio access node) 14 and the micro cells, respectively.

Therefore, the foregoing describes a communications system that offers improved access at low cost.

## Claims

1. A method for achieving wireless communications in a wireless network (12) having at least one macro cell (14) for communicating both voice and data with a mobile communications device (16) across a first wireless link (17) and, at least one micro cell (30₁), with a smaller coverage area and higher capacity per use than the at least one macro cell (14), for communicating data with the mobile communications device (16) across a second wireless communication link (33), **characterized in that** the method comprises the steps of:
in response to access of the at least one micro cell (30₁) by the mobile communications device (16), communicating signaling information between the at least one micro cell (30₁) and a control element (22) via a third wireless channel (50) between the at least one micro cell (30₁) and the macro cell (14); and
controlling the operation of the at least one micro cell (30₁) by the control element (22) responsive to the signaling information.

2. The method according to Claim 1 wherein the step of controlling the operation of the at least one micro cell (30₁) includes managing access by the mobile communications device (16) to the at least one micro cell (30₁).

3. The method according to Claim 1 wherein the step of communicating signaling information via the third wireless channel (50) includes communicating signaling information from each of the at least one microcells (30_{1,}30₂) separately.

4. The method according to Claim 1 wherein the step of communicating signaling information via the third wireless channel (50) includes encapsulating signaling information from a plurality of microcells (30_{1,}30₂).

5. The method according to Claim 1 further comprising assigning to the mobile communications device (16) codes and power settings to enable the mobile communications device (16) to communicate with the at least one macro cell (14) and the at least one micro cell (30₁) simultaneously.

6. A wireless communications system (10), **characterized by**:
at least one macro cell (14) for communicating both voice and data with a mobile communications device (16) across a first wireless link (17);
at least one micro cell (30₁) having a smaller coverage area and higher capacity per user than the at least one macro cell (14) for communicating data with the mobile communications device (16) across a second wireless communication link (33);
a control element (22) for controlling at least the operation of the at least one macro cell (14); and means for establishing
a third wireless channel (50) for communicating signaling information between the at least one micro cell (30₁) and the at least one macro cell (14) for transmission to the control element (22) in response to access of the at least one micro cell (30₁) by the mobile communications device (16) to enable the control element (22) to also control the operation of the at least one micro cell (30₁) responsive to the signaling information.

7. The system (10) according to Claim 6 wherein the control element (22) comprises a Serving General Packet Radio Service Node SGSN (22).

8. The system (10) according to Claim 6 wherein the control element (22) is adapted to manage access by the mobile communications device (16) to the at least one micro cell (30₁).

9. The system (10) according to Claim 6 wherein each of the at least one micro cells (30₁) is adapted to separately communicate signaling information across the third wireless channel (50).

10. The system (10) according to Claim 6 wherein the third wireless channel (50) is adapted to communicate encapsulated signaling information from a plurality of micro cells (30₁, 30₂) across the third wireless channel (50).

11. The system (10) according to Claim 6 wherein the control element (22) is adapted to assign to the mobile communications device (16) codes and power settings to enable the mobile communications device (16) to communicate with the at least one macro cell (14) and the at least one micro cell (30₁) simultaneously.

12. The system (10) according to Claim 7 further comprising:
a Gateway General Packet Radio Service Support Node GGSN (24); and
an Internet Protocol tunnel (40) for linking the GGSN (24) to an Internet Protocol router (38).

## Patentansprüche

1. Verfahren zum Erreichen drahtloser Kommunikationen in einem drahtlosen Netz (12), das mindestens eine Makrozelle (14) zum Übermitteln sowohl von Sprache als auch von Daten mit einer Mobilkommunikationsvorrichtung (16) über eine erste drahtlose Verbindung (17) und mindestens eine Mikrozelle (30₁) mit einem kleineren Versorgungsbereich und mit einer höheren Kapazität pro Nutzer als die mindestens eine Makrozelle (14) zum Übermitteln von Daten mit der Mobilkommunikationsvorrichtung (16) über eine zweite drahtlose Kommunikationsverbindung (33) aufweist, **dadurch gekennzeichnet, dass** das Verfahren die folgenden Schritte umfasst:
Übermitteln von Signalisierungsinformationen zwischen der mindestens einen Mikrozelle (30₁) und einem Steuerelement (22) über einen dritten drahtlosen Kanal (50) zwischen der mindestens einen Mikrozelle (30₁) und der Makrozelle (14) in Ansprechen auf den Zugriff auf die mindestens eine Mikrozelle (30₁) durch die Mobilkommunikationsvorrichtung (16); und
Steuern des Betriebs der mindestens einen Mikrozelle (30₁) durch das Steuerelement (22) in Ansprechen auf die Signalisierungsinformationen.

2. Verfahren nach Anspruch 1, wobei der Schritt des Steuerns des Betriebs der mindestens einen Mikrozelle (30₁) das Managen des Zugriffs durch die Mobilkommunikationsvorrichtung (16) auf die mindestens eine Mikrozelle (30₁) enthält.

3. Verfahren nach Anspruch 1, wobei der Schritt des Übermittelns von Signalisierungsinformationen über den dritten drahtlosen Kanal (50) das Übermitteln von Signalisierungsinformationen von jeder der mindestens einen Mikrozelle (30₁, 30₂) getrennt enthält.

4. Verfahren nach Anspruch 1, wobei der Schritt des Übermittelns von Signalisierungsinformationen über den dritten drahtlosen Kanal (50) das Kapseln der Signalisierungsinformationen von mehreren Mikrozellen (30₁, 30₂) enthält.

5. Verfahren nach Anspruch 1, das ferner das Zuweisen von Codes und Leistungseinstellungen zu der Mobilkommunikationsvorrichtung (16) umfasst, um zu ermöglichen, dass die Mobilkommunikationsvorrichtung (16) mit der mindestens einen Makrozelle (14) und mit der mindestens einen Mikrozelle (30₁) gleichzeitig kommuniziert.

6. Drahtloses Kommunikationssystem (10), **gekennzeichnet durch**
mindestens eine Makrozelle (14) zum Übermitteln sowohl von Sprache als auch von Daten mit einer Mobilkommunikationsvorrichtung (16) über eine erste drahtlose Verbindung (17);
mindestens eine Mikrozelle (30₁), die einen kleineren Versorgungsbereich und eine höhere Kapazität pro Nutzer als die mindestens eine Makrozelle (14) aufweist, zum Übermitteln von Daten mit der Mobilkommunikationsvorrichtung (16) über eine zweite drahtlose Kommunikationsverbindung (33);
ein Steuerelement (22) zum Steuern mindestens des Betriebs der mindestens einen Makrozelle (14); und
Mittel zum Aufbauen eines dritten drahtlosen Kanals (50) zum Übermitteln von Signalisierungsinformationen zwischen der mindestens einen Mikrozelle (30₁) und der mindestens einen Makrozelle (14) zur Übertragung an das Steuerelement (22) in Ansprechen auf den Zugriff auf die mindestens eine Mikrozelle (30₁) **durch** die Mobilkommunikationsvorrichtung (16), um zu ermöglichen, dass das Steuerelement (22) in Ansprechen auf die Signalisierungsinformationen ebenfalls den Betrieb der mindestens einen Mikrozelle (30₁) steuert.

7. System (10) nach Anspruch 6, wobei das Steuerelement (22) einen Serving General Packet Radio Service Node SGSN (22) umfasst.

8. System (10) nach Anspruch 6, wobei das Steuerelement (22) dafür ausgelegt ist, den Zugriff durch die Mobilkommunikationsvorrichtung (16) auf die mindestens eine Mikrozelle (30₁) zu managen.

9. System (10) nach Anspruch 6, wobei jede der mindestens einen Mikrozellen (30₁) dafür ausgelegt ist, Signalisierungsinformationen über den dritten drahtlosen Kanal (50) getrennt zu übermitteln.

10. System (10) nach Anspruch 6, wobei der dritte drahtlose Kanal (50) dafür ausgelegt ist, gekapselte Signalisierungsinformationen von mehreren Mikrozellen (30₁, 30₂) über den dritten drahtlosen Kanal (50) zu übermitteln.

11. System (10) nach Anspruch 6, wobei das Steuerelement (22) dafür ausgelegt ist, der Mobilkommunikationsvorrichtung (16) Codes und Leistungseinstellungen zuzuweisen, um zu ermöglichen, dass die Mobilkommunikationsvorrichtung (16) mit der mindestens einen Makrozelle (14) und mit der mindestens einen Mikrozelle (30₁) gleichzeitig kommuniziert.

12. System (10) nach Anspruch 7, das ferner umfasst:
einen Gateway General Packet Radio Service Support Node GGSN (24) und
einen Internetprotokolltunnel (40) zum Verbinden des GGSN (24) mit einem Internetprotokollrouter (38).

## Revendications

1. Un procédé pour effectuer des communications sans fil dans un réseau sans fil (12) disposant d'une macrocellule (14) au moins pour communiquer de la voix et des données à l'aide d'un dispositif mobile de communications (16) via un premier lien sans fil (17), et d'une microcellule (30₁) au moins, dotée d'une zone de couverture plus petite et d'une capacité par utilisateur supérieure à la macrocellule (14) au moins, pour la communication de données à l'aide du dispositif mobile de communications (16) via une seconde liaison de communication sans fil (33) **caractérisé en ce que** le procédé comprend les étapes suivantes :
en réponse à l'accès de la microcellule (30₁) au moins par le dispositif mobile de communications (16), la communication des informations de signalisation entre la microcellule (30₁) au moins et un élément de commande (22) via un troisième canal sans fil (50) entre la microcellule (30₁) au moins et la macrocellule (14) ; et
la commande du fonctionnement de la microcellule (30₁) au moins à l'aide de l'élément de commande (22) en réponse aux informations de signalement.

2. Le procédé selon la revendication 1, dans lequel l'étape de commande du fonctionnement de la microcellule (30₁) au moins comprend la gestion de l'accès, par le dispositif mobile de communications (16), à la microcellule au moins (30₁).

3. Le procédé selon la revendication 1, dans lequel l'étape de communication des informations de signalisation via le troisième canal sans fil (50) comprend la communication des informations de signalement à partir de chacune d'une des microcellules (30₁, 30₂) au moins séparément.

4. Le procédé selon la revendication 1, dans lequel l'étape de communication des informations de signalisation via le troisième canal sans fil (50) comprend l'encapsulation des informations de signalisation à partir d'une pluralité de microcellules (30₁, 30₂).

5. Le procédé selon la revendication 1 comprenant en outre l'attribution de codes et de réglages de puissance au dispositif mobile de communications (16) pour permettre au dispositif mobile de communications (16) de communiquer en simultané avec la macrocellule (14) au moins et la microcellule (30₁) au moins.

6. Un système de communication sans fil (10) **caractérisé par** :
une macrocellule (14) au moins pour communiquer de la voix et des données à l'aide d'un dispositif mobile de communications (16) via un premier lien sans fil (17) ;
une microcellule (30₁) au moins disposant d'une zone de couverture plus petite et d'une capacité par utilisateur supérieure à une des macrocellules (14) au moins pour communiquer des données à l'aide du dispositif mobile de communications (16) via un second lien de communication sans fil (33) ;
un élément de commande (22) pour commander au moins le fonctionnement d'une des macrocellules (14) au moins ; et un moyen d'établir
un troisième réseau sans fil (50) pour communiquer des informations de signalisation à la microcellule (30₁) au moins et à la macrocellule (14) au moins pour la transmission, vers l'élément de commande (22) en réponse à l'accès à une des microcellules (30₁) au moins par le dispositif mobile de communications (16) afin de permettre à l'élément de commande (22) de commander aussi le fonctionnement d'une des microcellules (30₁) au moins en réponse aux informations de signalisation.

7. Le système (10) selon la revendication 6, dans lequel l'élément de commande (22) comprend un noeud de support GPRS de service - SGSN (22).

8. Le système (10) selon la revendication 6, dans lequel l'élément de commande (22) est adapté afin de gérer l'accès du dispositif mobile de communications (16) à une des microcellules (30₁) au moins.

9. Le système (10) selon la revendication 6, dans lequel chacune des microcellules (30₁) au moins est adaptée afin de communiquer séparément les informations de signalisation via le troisième canal sans fil (50).

10. Le système (10) selon la revendication 6, dans lequel le troisième canal sans fil (50) est adapté pour communiquer des informations de signalisation encapsulées en provenance d'une pluralité de microcellules (30₁, 302) via le troisième canal sans fil (50).

11. Le système (10) selon la revendication 6 dans lequel l'élément de commande (22) est adapté afin d'attribuer des codes et des réglages de puissance au dispositif mobile de communications (16) pour permettre au dispositif mobile de communications (16) de communiquer en simultané avec une macrocellule (14) au moins et une microcellule (30₁) au moins.

12. Le système (10) selon la revendication 7, comprenant en outre : un noeud de support GPRS passerelle - GGSN (24) ; et un tunnel de protocole Internet (40) pour relier le GGSN (24) à un routeur de protocole Internet (38).
